Europäisches Patentamt

European Patent Office

Office européen des brevets

(11) Veröffentlichungsnummer: **0 313 759 B1**

# EUROPÄISCHE PATENTSCHRIFT

(45) Veröffentlichungstag der Patentschrift: **04.11.92**

(21) Anmeldenummer: **88113931.5**

(22) Anmeldetag: **26.08.88**

(51) Int. Cl.5: **F41A 27/18**, F41A 27/22, F16H 57/12, F16H 37/08

(54) **Seitenrichtantrieb für Kampf-fahrzeuge mit Panzerturm.**

(30) Priorität: **27.10.87 DE 3736262**

(43) Veröffentlichungstag der Anmeldung:
**03.05.89 Patentblatt 89/18**

(45) Bekanntmachung des Hinweises auf die Patenterteilung:
**04.11.92 Patentblatt 92/45**

(84) Benannte Vertragsstaaten:
**BE CH DE LI NL**

(56) Entgegenhaltungen:
EP-A- 0 059 921
GB-A- 633 971
US-A- 3 166 952
US-A- 3 238 803

THE TOOL AND MANUFACTURING ENGINEER vol. 56, no. 2, Februar 1966, U.S.A. Seiten 99 - 100; "To prevent backlash"

IBM Technical disclosure bulletin vol. 23, no. 3, August 1980, U.S.A. Seite 1105 T.G.Survant: "Anti-backlash motor mounting"

(73) Patentinhaber: **Wegmann & Co. GmbH**
**August-Bode-Strasse 1**
**W-3500 Kassel(DE)**

(72) Erfinder: **Schieche, Jost**
**Gartenstrasse 4**
**W-3507 Baunatal(DE)**
Erfinder: **Wallwey, Erich**
**Bethovenstrasse 17**
**W-3502 Vellmar(DE)**

(74) Vertreter: **Feder, Wolf-Dietrich et al**
**Dr. Wolf-D. Feder, Dr. Heinz Feder Dipl.-Ing.**
**P.-C. Sroka Dominikanerstrasse 37**
**W-4000 Düsseldorf 11(DE)**

## Beschreibung

Die Erfindung betrifft einen Seitenrichtantrieb für Kampffahrzeuge mit Panzerturm, mit den Merkmalen aus dem Oberbegriff des Patentanspruchs 1.

Derartige Seitenrichtantriebe bekannter Bauart besitzen zwei vollständig voneinander getrennte Antriebsmotoren, die über getrennte Getriebe jeweils auf ein Abtriebsritzel wirken. Die Anordnung von zwei Antriebsmotoren anstelle eines entsprechend größer ausgebildeten Antriebsmotors erfolgt dabei deshalb, weil der Einbauraum im Panzerturm eines Kampffahrzeuges begrenzt ist und auf diese Weise eine bessere Raumausnutzung möglich ist.

Es hat sich gezeigt, daß es bei der bekannten Anordnung zu Störungen kommen kann, die zu Schäden an den Zahngrenzen führen können.

Dies ist u.a. darauf zurückzuführen, daß wegen der Fertigungstoleranzen die beiden Antriebsmotoren unterschiedliche Beschleunigungscharakteristiken aufweisen und auch bei den Getrieben Fertigungstoleranzen auftreten, wobei sich unterschiedliche Reibwerte einstellen. Dies hat zur Folge, daß mit relativ großem Spiel in den Antrieben gearbeitet werden muß, was die Richtgüte erheblich beeinträchtigt.

Die der Erfindung zugrunde liegende Aufgabe bestand darin, einen Seitenrichtantrieb der oben erwähnten Bauart so auszubilden, daß auch bei geringstem Spiel innerhalb des Antriebs keine Störungen bei Verzahnungsungenauigkeiten und Teilungsfehlern auftreten und daß sich die beiden Antriebsmotoren gegenseitig unterstützen, ohne daß durch eine Mehr- oder Minderleistung eines Antriebsmotors eine Beeinträchtigung der Antriebsleistung oder der Richtgüte auftritt.

Die Lösung dieser Aufgabe geschieht erfindungsgemäß mit den Merkmalen aus dem kennzeichnenden Teil des Patentanspruchs 1. Vorteilhafte Weiterbildungen des erfindungsgemäßen Seitenrichtantriebes sind in den Unteransprüchen beschrieben.

Das erfindungsgemäß vorgesehene gemeinsame Getriebe gleicht sowohl Unterschiede in den Antriebsmomenten als auch Unterschiede in den Abtriebsmomenten aus.

Das erste Umlaufgetriebe wirkt als Summiergetriebe für die beiden Antriebsmotoren, wobei beide Antriebsmotoren auch einzeln eingesetzt werden können, ohne sich zu stören, beispielsweise wenn einer der beiden Antriebsmotoren ausfällt.

Das zweite Umlaufgetriebe wirkt als Differentialgetriebe, durch das Ungleichheiten im Abtrieb zum Zahnkranz des Panzerturms ausgeglichen werden. Dies hat den Vorteil, daß bei Unrundheiten, Zahndickenabweichungen und Teilungsfehlern ein minimales Verdrehflankenspiel erreicht werden kann. Dieses kann noch weiter herabgesetzt werden, wenn das Gehäuse des gemeinsamen Getriebes am Panzerturm mit einer justierbaren Aufhängung angeordnet ist, die in den Patentansprüchen 3 bis 6 beschrieben ist.

Das stark verringerte Spiel hat großen Einfluß auf die Justierung der mit dem Panzerturm verbundenen Waffe. Je geringer das Spiel ist um so rascher ist ohne mehrmaliges Hin- und Herlaufen der Antriebsmotoren die Sollstellung erreicht. Die besondere Aufhängung des gemeinsamen Getriebes über Exzenter am Panzerturm mit federnden Anschlägen erlaubt eine weitere Verringerung des Spieles, welche die Justiermöglichkeit der Waffe noch weiter verbessert.

Im folgenden wird anhand der beigefügten Zeichnungen ein Ausführungsbeispiel für den erfindungsgemäßen Seitenrichtantrieb näher erläutert.

In den Zeichnungen zeigen:

Fig. 1 in einer teilweise vertikal geschnittenen Darstellung das gemeinsame Getriebe eines Seitenrichtantriebes mit zwei Antriebsmotoren und zwei Abtriebsritzeln;

Fig. 2 eine Aufsicht auf das gemeinsame Getriebe nach Fig. 1 mit Darstellung der Aufhängung am Panzerturm;

Fig. 3 einen Schnitt nach der Linie III-III in Fig.2.

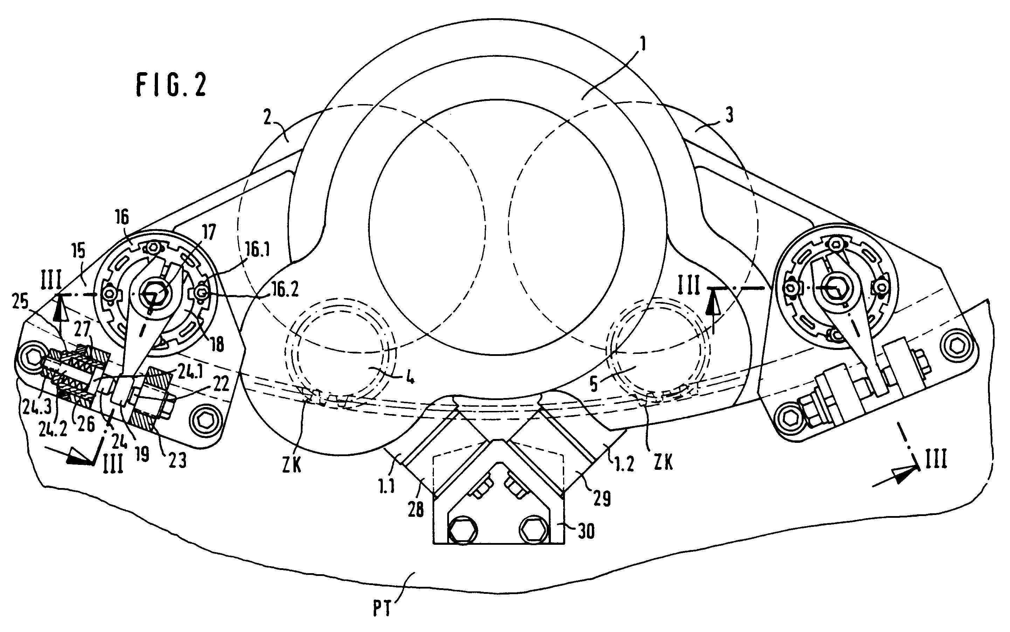

Der in den Zeichnungen dargestellte Seitenrichtantrieb ist am nur in Fig. 2 angedeuteten Panzerturm eines nicht näher dargestellten Kampffahrzeugs, beispielsweise eines Flugzeugabwehrpanzers, angeordnet. Wie weiter unten ausführlicher erläutert, besitzt der Antrieb zwei Antriebsmotoren 2 und 3, die über ein in einem Gehäuse 1 angeordnetes gemeinsames Getriebe auf zwei Abtriebsritzel 4 und 5 wirken, welche in den mit dem Panzerturm PT fest verbundenen Zahnkranz ZK eingreifen.

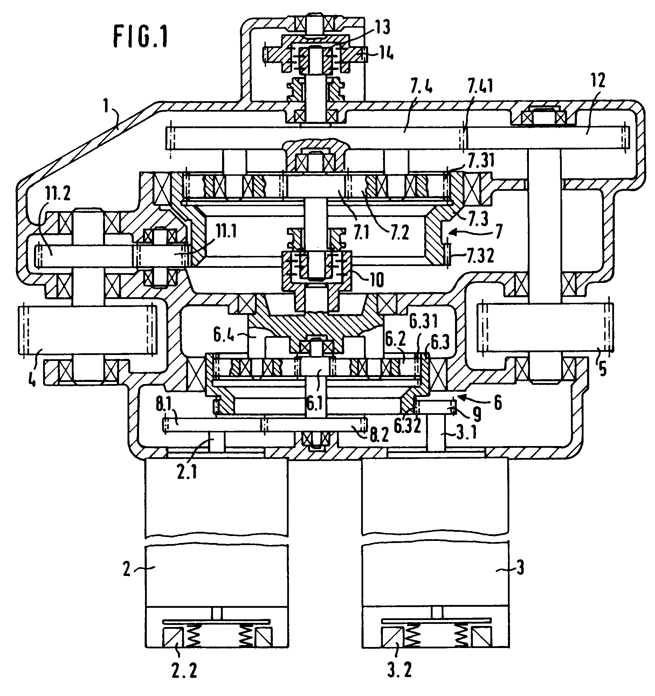

Im Gehäuse 1 des gemeinsamen Getriebes sind zwei Umlaufgetriebe 6 und 7 angeordnet, die über eine Schaltkupplung 10 hintereinandergeschaltet sind. Wie aus Fig. 1 unmittelbar abzulesen, ist die Anordnung so, daß der erste Antriebsmotor 2 auf seiner Abtriebswelle 2.1 ein Zahnrad 8.1 aufweist, das mit einem Zahnrad 8.2 kämmt, welches über eine gemeinsame Welle mit dem Sonnenrad 6.1 des ersten Umlaufgetriebes 6 verbunden ist. Der zweite Antriebsmotor 3 trägt auf einer Abtriebswelle 3.1 ein Zahnrad 9, das direkt in eine an der Außenseite des Hohlrades 6.3 des ersten Umlaufgetriebes 6 angeordnete Verzahnung 6.32 eingreift. Zwischen dem Sonnenrad 6.1 und dem Hohlrad 6.3 sind in bekannter Weise die Planetenräder 6.2 angeordnet, die in die an der Innenseite des Hohlrades 6.3 angeordnete Verzahnung 6.31 eingreifen. Es ist hierbei vorteilhaft in nicht eigens dargestellter Weise drei Planetenräder 6.2 vorzusehen, die über den Steg 6.4 miteinander verbunden sind. Der als Abtriebsglied des ersten Umlaufgetriebes 6 wirkende Steg 6.4 ist über das Schaltgetriebe 10 mit dem Sonnenrad 7.1 des zweiten Umlaufgetriebes 7 verbunden. Auch das zweite Umlaufgetriebe 7 besitzt drei Planetenräder 7.2, die in die Verzahnung 7.31 des sie umfassenden Hohlrades 7.3 eingreifen. An der Außenseite des Hohlrades 7.3 ist eine weitere Verzahnung 7.32 angeordnet, mit welcher ein Zahnrad 11.1 kämmt, das in ein Zahnrad 11.2 eingreift, welches über eine gemeinsame Welle mit dem ersten Abtriebsritzel 4 verbunden ist, das in in Fig. 1 nicht dargestellter Weise in den Zahnkranz ZK des Panzerturms PT eingreift.

Der die Planetenräder 7.2 verbindende Steg 7.4 trägt an seinem äußeren Umfang einen Zahnkranz 7.41, in welche ein Zahnrad 12 eingreift, das über eine gemeinsame Welle mit dem zweiten Abtriebsritzel 5 verbunden ist, das ebenfalls in den Zahnkranz ZK des Panzerturms PT eingreift.

Weiterhin ist der Steg 7.4 über eine zweite Schaltkupplung 13 mit einem Zahnrad 14 verbunden, in das in nicht eigens dargestellter Weise das Abtriebsrad eines manuell betätigbaren Notantriebs eingreift.

Die Drehmomentübertragung läuft also auf zwei sich kreuzenden Wegen einerseits vom ersten Antriebsmotor 2 über ein zusätzliches Zahnradgetriebe 8.1-8.2, das Sonnenrad 6.1, die Planetenräder 6.2, den Steg 6.4, die Schaltkupplung 10, das Sonnenrad 7.1, die Planetenräder 7.2, das Hohlrad 7.3 und ein weiteres Zahnradgetriebe 11.1-11.2 zum ersten Abtriebsritzel 4 und andererseits vom zweiten Antriebsmotor 3 über das Zahnrad 9, das Hohlrad 6.3, die Planetenräder 6.2, den Steg 6.4, die Schaltkupplung 10, das Sonnenrad 7.7, die Planetenräder 7.2, den Steg 7.4 und das Zahnrad 12 zum zweiten Abtriebsritzel 5.

Über das erste Umlaufgetriebe 6 summieren sich die Drehmomente der beiden Antriebsmotoren 2 und 3, wobei der Antrieb auch durch nur einen der beiden Antriebsmotoren erfolgen kann, etwa durch Abbremsung des jeweils anderen Antriebsmotors mittels einer der beiden Bremseinrichtungen 2.2 und 3.2.

Das zweite Umlaufgetriebe 7 wirkt als Differentialgetriebe in Bezug auf die beiden Abtriebsritzel 4 und 5.

Die zwischengeschalteten Zahnradgetriebe 8.1-8.2, 9, 11.1-11.2 und 12 sind unter Berücksichtigung der Übersetzungsverhältnisse zwischen den verschiedenen Ein-und Ausgängen der Umlaufgetriebe 6 und 7 so ausgelegt, daß sich auf den beiden oben angegebenen Wegen der Drehmomentübertragung genau das gleiche Untersetzungsverhältnis ergibt.

Auf diese Weise wird erreicht, daß Verzahnungsungenauigkeiten oder Teilungsfehler am Zahnkranz ZK des Panzerturms PT durch das Umlaufgetriebe 7 ausgeglichen werden, während Unterschiede in den Beschleunigungscharakteristiken der beiden Antriebsmotoren 2 und 3 durch das Umlaufgetriebe 6 ausgeglichen werden. Die Lösung, den Abtrieb des Seitenrichtantriebes über zwei Abtriebsritzel 4 und 5 auf den Zahnkranz ZK wirken zu lassen, hat den weiteren Vorteil, daß die Verzahnung dieser Drehverbindung schwächer ausgelegt werden kann, da die Abtriebsmomente halbiert werden können.

Die besondere Ausbildung und Anordnung des oben beschriebenen gemeinsamen Getriebes am Zahnkranz ZK macht es möglich, den Eingriff der Ritzel 4,5 in den Zahnkranz ZK mit äußerst geringem Spiel vorzusehen, was für die Justierung des Panzerturmes und damit der Waffe von großem Vorteil ist.

Wegen dieses geringen Spiels ist es vorteilhaft, das gemeinsame Getriebe mit seinem Gehäuse 1 in einer genau justierbaren Aufhängevorrichtung mit dem Panzerturm PT zu verbinden, die nachfolgend genauer beschrieben wird:

Wie Fig. 2 zu entnehmen, ist das Gehäuse 1 über zwei Gelenkverbindungen mit dem Panzerturm PT verbunden. Diese Gelenkverbindungen sind auf einem Kreisbogen angeordnet, der koaxial zum Zahnkranz ZK liegt und sie befinden sich in Umfangsrichtung gesehen außerhalb des Bereiches der Abtriebsritzel 4 und 5. Die beiden Gelenkverbindungen sind gleich aufgebaut und im folgenden wird die in Fig. 2 links von der Mitte angeordnete Gelenkverbindung näher erläutert.

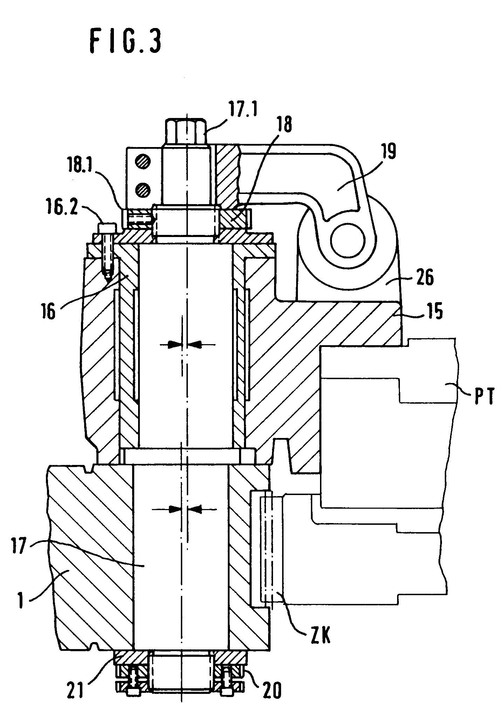

Die Gelenkverbindung weist einen Gelenkbolzen 17 auf, der senkrecht zur Ebene des Zahnkranzes ZK angeordnet ist und dessen eines Ende exzentrisch in einer Bohrung im Gehäuse 1 drehbar angeordnet ist. Am in Fig. 3 unteren Ende ist der aus dem Gehäuse 1 herausragende Teil des Gelenkbolzens 17 durch eine geschlitzte Mutter 20 gehaltert, die über eine Abstandsscheibe 21 am Gehäuse 1 anliegt. Das andere Ende des Gelenkbolzens 17 ist drehbar durch eine Einstellbuchse 16 geführt, die ihrerseits exzentrisch in einer Bohrung eines Befestigungsflansches 15 angeordnet ist, der mit dem Panzerturm PT fest verbunden ist. Die Einstellbuchse 16 besitzt an ihrem oberen Ende einen Flansch, welcher mit in Umfangsrichtung verlaufenden Langlöchern 16.1 versehen ist, durch die Schrauben 16.2 geführt sind, mit denen die Einstellbuchse, die verdrehbar im Befestigungsflansch 15 sitzt, in einer bestimmten Stellung fixiert werden kann.

Das nach oben herausgeführte Ende des Gelenkbolzens 17 ist durch eine Mutter 18 gesichert, die durch eine Stellschraube 18.1 fixierbar ist. Weiterhin trägt das obere Ende des Gelenkbolzens 17 einen radial nach außen weisenden Stellhebel 19, dessen freies Ende zwischen zwei mit dem Panzerturm PT verbundenen Anschlägen angeordnet ist. Der eine Anschlag 22 ist in einer Halterung 23 eingeschraubt und stellt somit einen festen Anschlag dar, dessen Position durch Verdrehen veränderbar ist. Der zweite Anschlag 24 ist in Schwenkrichtung des Stellhebels 19 gegen Federkraft verschiebbar. Zu diesem Zweck ist der Anschlag 24 auf einer Grundplatte 24.1 montiert, die gleitend in einer Hülse 25 sitzt, in der eine Schraubendruckfeder 27 angeordnet ist. Die Grundplatte 24.1 weist eine durch die Hülse 25 und die Schraubendruckfeder 27 geführte Halterungsstange 24.2 auf, die an dem vom Anschlag 24 abgewandten Ende aus der Hülse 25 herausgeführt ist und an ihrem äußeren Ende eine Einstellmutter 24.3 trägt. Durch Verdrehen der Einstellmutter 24.3 kann die Vorspannung der Schraubendruckfeder 27 verändert werden. Die Hülse 25 selbst ist in eine Halterung 26 eingeschraubt, welche fest mit dem Panzerturm PT verbunden ist. Auf diese Weise ist es möglich, Lage und Vorspannung des Anschlags 24 genau vorzugeben. Die Einstellung des Gelenkbolzens 17 in der Bohrung des Gehäuses 1 erfolgt über einen am äußersten oberen Ende des Gelenkbolzens 17 angeordneten Sechskant 17.1.

Die in Fig. 2 in der rechten Bildhälfte dargestellte Gelenkverbindung ist analog aufgebaut.

Wie aus den Fig. 2 und 3 unmittelbar zu erkennen, besitzen die beiden Gelenkverbindungen eine ganze Reihe von Justiermöglichkeiten, die es erlauben, das Gehäuse 1 bei der Anordnung am Panzerturm PT so einzujustieren, daß die Ritzel 4 und 5 mit optimalem Spiel in den Zahnkranz ZK eingreifen, wobei die Ausbildung der Gelenkverbindung so ist, daß Toleranzen in den Drehverbindungen zwischen den Ritzeln 4 und 5 und dem Zahnkranz ZK über den exzentrisch im Gehäuse 1 angeordneten Gelenkbolzen 17, den Einstellhebel 19 und den federnden Anschlag 24 ausgeglichen werden.

Wie aus Fig. 2 zu ersehen, stützt sich das Gehäuse 1 mit zwei unterhalb der Gelenkverbindungen angeordneten Ansätzen 1.1 und 1.2 über Gummifedern 28 und 29 zusätzlich an einem mit dem Panzerturm PT verbundenen Befestigungsflansch 30 ab.

## Patentansprüche

1. Seitenrichtantrieb für Kampffahrzeuge mit Panzerturm, bei dem zwei Antriebsmotoren (2, 3) unter Zwischenschaltung eines Untersetzungsgetriebes jeweils zwei in einen mit dem Panzerturm fest verbundenen Zahnkranz eingreifende Abtriebsritzel (4, 5) antreiben, dadurch gekennzeichnet, daß als Untersetzungsgetriebe ein beiden Antriebsmotoren (2, 3) und beiden Abtriebsritzeln (4, 5) gemeinsames Getriebe dient, das aus zwei Umlaufgetrieben (6, 7) mit je einem Sonnenrad (6.1, 7.1), Planetenrädern (6.2, 7.2), einem die Planetenräder umfassenden Hohlrad (6.3, 7.3) und einem die Planetenräder verbindenden Steg (6.4, 7.4) zusammengesetzt ist, die derart hintereinandergeschaltet sind, daß der Steg (6.4) des ersten Umlaufgetriebes (6) über eine Schaltkupplung (10) mit dem Sonnenrad (7.1) des zweiten Umlaufgetriebes (7) verbunden ist und der erste Antriebsmotor (2) das Sonnenrad (6.1) und der zweite Antriebsmotor (3) das Hohlrad (6.3) des ersten Umlaufgetriebes (6) antreiben, während das erste Abtriebsritzel (4) mit dem Hohlrad (7.3), das zweite Abtriebsritzel (5) mit dem Steg (7.4) des zweiten Umlaufgetriebes (7) verbunden sind, wobei durch Zwischenschalten von zusätzlichen Zahnradgetrieben (8.1, 8.2; 9 bzw. 11.1, 11.2; 12) zwischen die Antriebsmotoren (2.3) und das erste Umlaufgetriebe (6) bzw. zwischen das zweite Umlaufgetriebe (7) die die Abtriebsritzel (4.5) erreicht ist, daß das Untersetzungsverhältnis vom ersten Antriebsmotor (2) zum ersten Abtriebsritzel (4) gleich ist dem Untersetzungsverhältnis vom zweiten Antriebsmotor (3) zum zweiten Abtriebsritzel (5).

2. Seitenrichtantrieb nach Anspruch 1, dadurch gekennzeichnet, daß der Steg (7.4) des zweiten Umlaufgetriebes (7) über eine weitere Schaltkupplung (13) mit einem Anschluß (14) für eine manuelle Notantriebsvorrichtung verbunden ist.

3. Seitenrichtantrieb nach Anspruch 1 oder 2, dadurch gekennzeichnet, daß das Gehäuse (1) des gemeinsamen Getriebes mit dem Panzerturm (PT) über zwei Gelenkverbindungen verbunden ist, die jeweils auf einem Kreisbogen koaxial zum Zahnkranz (ZK) in Umfangsrichtung gesehen außerhalb des Bereiches der Abtriebsritzel (4, 5) angeordnet sind und jeweils einen senkrecht zur Ebene des Zahnkranzes (ZK) angeordneten Gelenkbolzen (17) aufweisen, dessen eines Ende exzentrisch in einer Bohrung des Getriebegehäuses (1) und dessen anderes Ende in einer Bohrung eines mit dem Panzerturm (PT) fest verbundenen Befestigungsflansches (15) drehbar angeordnet ist, wobei an einem Ende des Gelenkbolzens (17) ein Stellhebel (19) fest angeordnet ist, dessen freies Ende zwischen einem fest mit dem Panzerturm (PT) verbundenen ersten Anschlag (22) und einem gegen Federkraft verschiebbar mit dem Panzerturm (PT) verbundenen zweiten Anschlag (24) angeordnet ist.

4. Seitenrichtantrieb nach Anspruch 3, dadurch gekennzeichnet, daß der Gelenkbolzen (17) in dem Befestigungsflansch (15) in einer Einstellbuchse (16) drehbar geführt ist, die exzentrisch in einer Bohrung des Befestigungsflansches (15) verdrehbar und in jeder Position fixierbar angeordnet ist.

5. Seitenrichtantrieb nach Anspruch 3 oder 4, dadurch gekennzeichnet, daß der feste Anschlag (22) in seiner Lage einstellbar verschiebbar ist.

6. Seitenrichtantrieb nach einem der Ansprüche 3 bis 5, dadurch gekennzeichnet, daß am gegen Federkraft verschiebbaren Anschlag (24) die Vorspannung der Feder (27) einstellbar veränderbar ist.

7. Seitenrichtantrieb nach einem der Ansprüche 3 bis 6, dadurch gekennzeichnet, daß das Gehäuse (1) des gemeinsamen Getriebes an mindestens einer Stelle unterhalb der Gelenkverbindung über eine Gummifeder (28, 29) mit dem Panzerturm (PT) verbunden ist.

**Claims**

1. Traversing gear for combat vehicles having an armoured turret, in which two drive motors (2, 3), a reduction gear being interposed, drive in each case two output pinions (4, 5) engaging into a gear rim firmly connected to the armoured turret, characterised in that a gear system common to both drive motors (2, 3) and to both output pinions (4, 5) serves as the reduction gear, which gear system is composed of two planetary gear systems (6, 7), each having a sun wheel (6.1, 7.1), planet wheels (6.2, 7.2), a hollow wheel (6.3, 7.3) embracing the planet wheels and a crosspiece (6.4, 7.4) connecting the planet wheels, which planetary gear systems are connected in series behind one another in such a way that the crosspiece (6.4) of the first planetary gear system (6) is connected by a switch coupling (10) to the sun wheel (7.1) of the second planetary gear system (7) and the first drive motor (2) drives the sun wheel (6.1) and the second drive motor (3) drives the hollow wheel (6.3) of the first planetary gear system (6), whilst the first output pinion (4) is connected to the hollow wheel (7.3), the second output pinion (5) to the crosspiece (7.4) of the second planetary gear system (7), the interposition of additional toothed gearings (8.1, 8.2; 9 or 11.1, 11.2; 12) between the drive motors (2, 3) and the first planetary gear system (6) or between the second planetary gear system (7) and the output pinions (4, 5) having the effect that the reduction gear ratio of the first drive motor (2) to the first output pinion (4) is equal to the reduction gear ratio of the second drive motor (3) to the second output pinion (5).

2. Traversing gear according to Claim 1, characterised in that the crosspiece (7.4) of the second planetary gear system (7) is connected by a further switch coupling (13) to a connection (14) for a manual emergency drive device.

3. Traversing gear according to Claim 1 or 2, characterised in that the casing (1) of the common gear system is connected to the armoured turret (PT) by two hinge joints, which are respectively disposed on an arc coaxial to the gear rim (ZK), viewed in the peripheral direction, outside the area of the output pinions (4, 5), and respectively exhibit a hinge bolt (17) disposed perpendicular to the plane of the gear rim (ZK), one end of which hinge bolt is disposed eccentrically in a bore of the gear casing (1) and the other end of which hinge bolt is rotatably disposed in a bore of an attachment flange (15) firmly connected to the armoured turret (PT), there being firmly disposed at one end of the hinge bolt (17) an adjusting lever (19), the free end of which is disposed between a first stop (22) firmly connected to the armoured turret (PT) and a second stop (24) connected displaceably against spring force to the armoured turret (PT).

4. Traversing gear according to Claim 3, characterised in that the hinge bolt (17) in the attachment flange (15) is rotatably guided in an adjusting bush (16), which is eccentrically disposed in a bore of the attachment flange (15) such that it can be twisted and fixed in any position.

5. Traversing gear according to Claim 3 or 4, characterised in that the firm stop (22) can be adjustably displaced in terms of its position.

6. Traversing gear according to one of Claims 3 to 5, characterised in that the pre-tensioning of the spring (27) can be adjustably varied at the stop (24) which is displaceable against spring force.

7. Traversing gear according to one of Claims 3 to 6, characterised in that the casing (1) of the common gear system is connected, at at least one point beneath the hinge joint (27), by a rubber spring (28, 29) to the armoured turret (PT).

## Revendications

1. Mécanisme de pointage en direction pour véhicules de combat avec tourelle blindée dans lequel deux moteurs d'entraînement (2, 3) entraînent, avec interposition d'une transmission de démultiplication, deux pignons de récepteur (4, 5) engrenaut avec la couronne dentée assemblée de manière fixe à la tourelle blindée, caractérisé en ce que la transmission de démultiplication est assurée par une transmission commune aux deux moteurs d'entraînement (2, 3) et aux deux pignons de récepteur (4, 5), cette transmission commune étant constituée de deux transmissions planétaires (6,7) ayant chacune une roue solaire (6.1, 7.1), des roues planétaires (6.2, 7.2), une roue creuse (6.3, 7.3) entourant les roues planétaires et une barrette (6.4, 7.4) assemblant les roues planétaires qui sont montées les unes derrière les autres de façon à ce que la barrette (6.4) de la transmission planétaire (6) soit assemblée par un accouplement à commutation (10) avec la roue solaire (7.1) de la deuxième transmission planétaire (7) et que le premier moteur d'entraînement (2) entraîne la roue solaire (6.1), tandis que le deuxième moteur d'entraînement (3) entraîne la roue creuse (6.3) de la première transmission planétaire tandis que le premier pignon de récepteur (4) est connecté avec la roue creuse (7.3), le deuxième pignon de récepteur (5) est connecté avec la barrette (7.4) de la deuxième transmission planétaire (7) tandis que, par interposition de transmissions à roues dentées supplémentaires (8.1, 8.2, 9) ou (11.1, 11.2, 12) entre les moteurs d'entraînement (2, 3) et la première transmission planétaire (6) ou entre la deuxième transmission planétaire (7) et le pignon de récepteur (4, 7), on obtient que le rapport de démultiplication du premier moteur d'entrainement (2) vis-à-vis du premier pignon de récepteur (4) est égal au rapport de démultiplication du deuxième moteur d'entraînement (3) vis-à-vis du deuxième pignon de récepteur (5).

2. Mécanisme de pointage en direction selon la revendication 1, caractérisé en ce que la barrette (7.4) de la deuxième transmission planétaire (7) est connectée par un autre accouplement à commutation (3) avec un raccordement (14) pour un dispositif de mécanisme de secours manuel.

3. Mécanisme de pointage en direction selon la revendication 1 ou 2, caractérisé en ce que le boîtier (1) de la transmission commune est assemblé à la tourelle blindée (PT) par deux assemblages à articulation qui sont disposés chacun sur un arc de cercle coaxialement par rapport à la couronne dentée (ZK) et, lorsqu'on regarde en direction de la périphérie, à l'extérieur de la zone des pignons de récepteur (4, 5) et présentent chacun un boulon d'articulation (17) disposé perpendiculairement au plan de la couronne dentée (ZK) dont une extrémité est montée excentriquement dans un alésage du boîtier de transmission (1) et dont l'autre extrémité est montée dans un alésage d'un flasque de fixation (15) assemblé de manière fixe à la tourelle blindée (PT) avec possibilité de rotation tandis que, à une extrémité du boulon d'articulation (17), est monté de manière fixe un levier de réglage (19) dont l'extrémité libre est disposée entre une première butée (22) assemblée de manière fixe à la tourelle blindée (PT) et une deuxième butée (24) assemblée à la tourelle blindée (PT) avec possibilité de coulissement à l'encontre de la force d'un ressort.

4. Mécanisme de pointage en direction selon la revendication 3, caractérisé en ce que le boulon d'articulation (17) est guidé à pivot dans le flasque de fixation 15 dans une buselure de réglage (16) qui est montée à pivot et excentriquement dans un alésage du flasque de fixation (15) et qui peut être fixée en toute position.

5. Mécanisme de pointage en direction selon la revendication 3 ou 4, caractérisé en ce que la butée fixe (22) peut coulisser avec possibilité de réglage de sa position.

6. Mécanisme de pointage en direction selon l'une des revendications 3 à 5, caractérisé en ce que la précontrainte du ressort (27) peut être réglée et modifiée pour la butée (24) pouvant coulisser à l'encontre de la force du ressort.

7. Mécanisme de pointage en direction selon l'une des revendications 3 à 6, caractérisé en ce que le boîtier (1) de la transmission commune est assemblé à la tourelle blindée (PT), au moins à un endroit en dessous de l'assemblage à articulation, par l'intermédiaire d'un ressort en caoutchouc (28, 29).

FIG.1

FIG.2

8

# FIG.3